# EUROPEAN PATENT APPLICATION

(11) **EP 4 141 758 A1**
(43) Date of publication of application: **01.03.2023**
(21) Application number: 22191880.8
(22) Date of filing: 24.08.2022
(51) Int. Cl.: G06Q 10/06

(54) **WORK MANAGEMENT METHOD, WORK MANAGEMENT SYSTEM, AND WORK MANAGEMENT PROGRAM**

(30) Priority: 25.08.2021 JP 2021136810
(71) Applicant: Yanmar Holdings Co., Ltd., Osaka-shi, Osaka 530-8311 (JP)
(72) Inventor: KONDO, Takuya, Osaka-shi, 5308311 (JP); MIYAUCHI, Shunsuke, Osaka-shi, 5308311 (JP); YOSHIMINE, Takumi, Osaka-shi, 5308311 (JP); MITANI, Hideki, Osaka-shi, 5308311 (JP)
(74) Representative: Dennemeyer & Associates S.A.

(57) **Abstract**

[Problem] To assist users in identifying the fields in which the work type has been confirmed and the fields in which the work type has not been confirmed.

[Solution] A work management method comprises storing work data 300 associating a determined work type that represents work performed in a first work region 400-1 and has been determined with work region information that represents the first work region 400-1. In addition, the work management method comprises estimating an estimated work type that represents work performed by a work device 30 in a second work region 400-2, based on operation information that represents operation status of the work device 30. In addition, the work management method comprises outputting region display information that distinctively represents the first work region 400-1 corresponding to the determined work type and the second work region 400-2 corresponding to the estimated work type that has not been determined.

## Description

### TECHNICAL FIELD

The present invention relates to a work management method, a work management system, and a work management program.

### BACKGROUND ART

In recent years, a use of information about work in a field for analysis of cultivation management has been studied.

Patent document 1 discloses a technique for receiving operation information from a work device used in work in a field and estimating the work type of the work performed in the field based on the received operation information.

### PRIOR ART DOCUMENT

### PATENT DOCUMENT

Patent Document 1: Japanese Unexamined Patent Application Publication No. 2021-087361

### SUMMARY OF INVENTION

### TECHNICAL PROBLEM

The work type estimated by the technique described in the Patent Document 1 may differ from a work type of an actual work performed. Therefore, the user, e.g., worker, field owner, etc., sets whether or not the estimated work type is the same as the work type of the actual work performed. Here, when work has been performed in many fields, the user may not be able to easily identify the fields in which the work type has been confirmed and the fields in which the work type has not been confirmed.

In view of the above situation, one of the purposes of this disclosure is to assist users in identifying the fields in which the work type has been confirmed and the fields in which the work type has not been confirmed. The other purposes can be understood from the following description and the description of embodiments.

### SOLUTION TO PROBLEM

A description will hereinafter be made on means for solving the problem by using numbers and signs used in modes for carrying out the invention. These numbers and signs are added in parentheses for reference and to show exemplary corresponding relationships between the description of the claims and the modes for carrying out the invention. Therefore, the claims should not be construed as being limited by the description with the parentheses.

A work management method according to one embodiment to achieve the above-mentioned purpose comprises storing work data (300) associating a determined work type that represents work performed in a first work region (400-1) and has been determined with work region information that represents the first work region (400-1). In addition, the work management method comprises estimating an estimated work type that represents work performed by a work device (30) in a second work region (400-2), based on operation information that represents operation status of the work device (30). In addition, the work management method comprises outputting region display information that distinctively represents the first work region (400-1) corresponding to the determined work type and the second work region (400-2) corresponding to the estimated work type that has not been determined.

A work management system (1000) according to one embodiment to achieve the above-mentioned purpose comprises a data storage part (150), an estimation part (160), and an output part (190). The data storage part (150) stores work data (300) associating a determined work type that represents work performed in a first work region (400-1) and has been determined with work region information that represents the first work region (400-1). The estimation part (160) estimates an estimated work type that represents work performed by a work device (30) in a second work region (400-2), based on operation information that represents operation status of the work device (30). The output part (190) outputs region display information that distinctively represents the first work region (400-1) corresponding to the determined work type and the second work region (400-2) corresponding to the estimated work type that has not been determined.

A work management program (310) according to one embodiment to achieve the above-mentioned purpose causes a computing unit (120) to execute storing work data (300) associating a determined work type that represents work performed in a first work region (400-1) and has been determined with work region information that represents the first work region (400-1). In addition, the work management program (310) causes the computing unit (120) to execute estimating an estimated work type that represents work performed by a work device (30) in a second work region (400-2), based on operation information that represents operation status of the work device (30). In addition, the work management program (310) causes the computing unit (120) to execute outputting region display information that distinctively represents the first work region (400-1) corresponding to the determined work type and the second work region (400-2) corresponding to the estimated work type that has not been determined.

### ADVANTAGEOUS EFFECTS OF INVENTION

According to the above modes, the user can efficiently confirm the work type registered in the work management device.

### BRIEF DESCRIPTION OF THE DRAWINGS

Fig. 1 is a schematic diagram of a work management system in an embodiment.
Fig. 2 is a diagram illustrating work regions that are displayed by a terminal in the embodiment.
Fig. 3 is a graph illustrating a quantity of the work regions for each work type in the embodiment.
Fig. 4 is a diagram illustrating a configuration of work data in the embodiment.
Fig. 5 is a diagram illustrating a functional block executed by the work management system in the embodiment.
Fig. 6 is a flowchart illustrating processing executed by the work management system in the embodiment.
Fig. 7 is a graph illustrating a quantity of the work regions for each work type in the embodiment.

### DESCRIPTION OF EMBODIMENTS

### (First Embodiment)

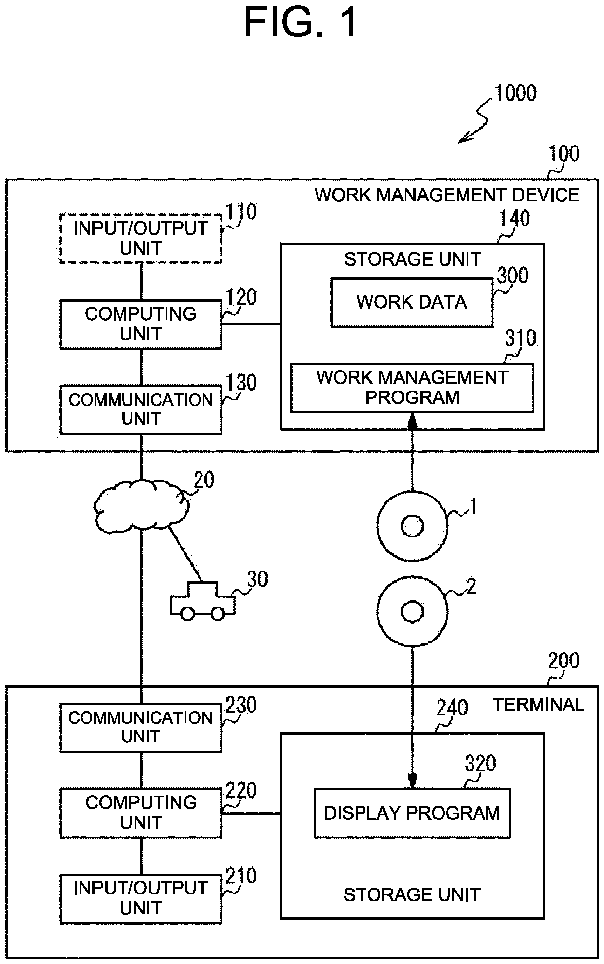

A description will be made on a work management system 1000 according to this embodiment of the present invention with reference to the drawings. As illustrated in Fig. 1, in this embodiment, the work management system 1000 includes a work management device 100 and a terminal 200. The work management device 100 is communicably connected to the terminal 200 and a work device 30 via a network 20, for example, the Internet.

The work management device 100 acquires operation information from the work device 30 and, based on the acquired operation information, estimates information related to work, such as a work region, a work period, a work type, etc. The work period represents a period during which the work device 30 has worked in a field, for example, represents work from the time when the engine of the work device 30 starts until the engine stops. The work type represents the type of work performed in the field, e.g., plowing, soil preparation, fertilization, planting, etc. The work device 30 includes, for example, a tractor that tows a work machine that performs the work. The work machine includes, for example, plows and rotaries for plowing, harrows for soil preparation, broadcasters for fertilization, and transplanters for planting.

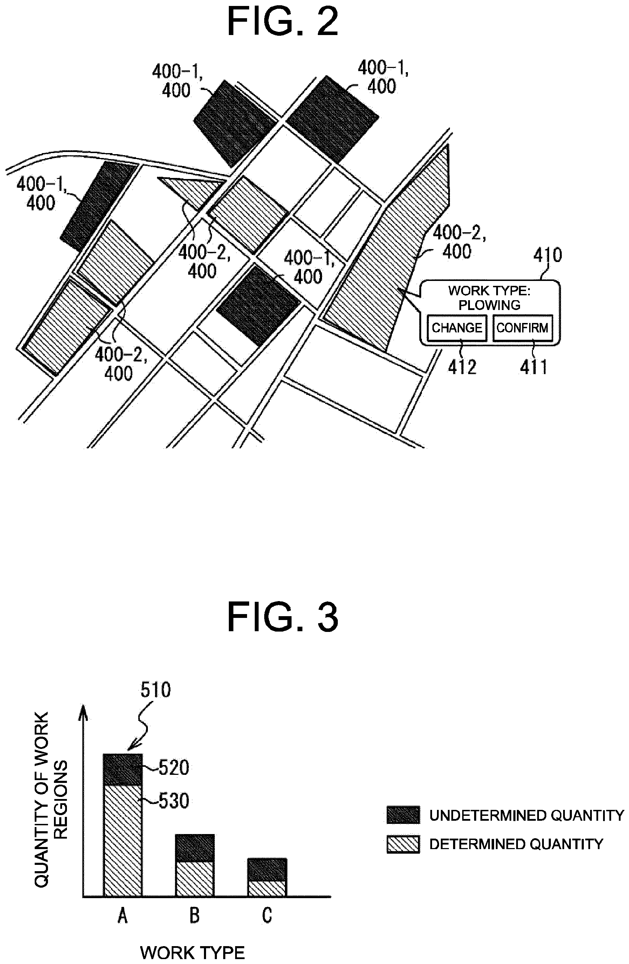

The terminal 200 acquires information about the work from the work management device 100 and provides the acquired information about the work to the user, e.g., the worker, the owner of the field, etc. For example, the terminal 200 displays an image representing a plurality of work regions 400 on a map, as illustrated in Fig. 2. The terminal 200 can distinctively display a first work region 400-1, in which the user has confirmed the work type, and a second work region 400-2, in which the user has not confirmed the work type. For example, the color of the region representing the first work region 400-1, in which the work type has been confirmed, is different from the color of the region representing the second work region 400-2, in which the work type has not been confirmed. This allows the user to easily identify the second work region 400-2 and the percentage of the second work region in which the work type has not been confirmed.

In addition, as illustrated in Fig. 3, the terminal 200 displays an overall quantity 510 representing the quantity of the work regions 400 in which the work has been performed for each work type in a graph. In addition, the quantity of the work regions 400 may distinctively represent an undetermined quantity 520 representing the quantity of the second work regions 400-2 in which the work type has not been confirmed, and a determined quantity 530 representing the quantity of the first work regions 400-1 in which the work type has been confirmed. This allows the user to easily confirm trends in the work types being performed in the a plurality of work regions 400. In addition, the user can easily confirm the percentage of the second work region 400-2 in which the work type has not been confirmed for each work type, and can also confirm the trend of the estimated work type. The terminal 200 may display a list of the overall quantity 510 representing the quantity of the work regions 400 in which the work has been performed for each work type.

Here, the operation information includes information representing the operation status of the work device 30 when work is being performed in the field, and examples of such information are a speed, a steering angle, and an engine speed of the work device 30, an ON/OFF status of each of various clutches, and location information of the work device 30 at each time. In the case in which the work device 30 is a vehicle that tows a work machine, for example, the tractor, the operation information may include a power take-off (PTO) speed at the time of transmitting power to the work machine, a hitch height and a lift arm angle indicating a posture of the work machine, and the like.

The operation information also includes a location information of the work device 30. The work device 30 is equipped with a positioning device, for example, a Global Navigation Satellite System (GNSS) receiver, to acquire the location information representing the position of the work device 30 at each time it has moved.

### (Configuration of Work Management System)

A description will be made on a configuration of the work management device 100 that is included in the work management system 1000 illustrated in Fig. 1. The work management device 100 includes an input/output unit 110, a computing unit 120, a communication unit 130, and a storage unit 140. The work management device 100 is a computer, for example. The input/output unit 110 receives information that is used by the computing unit 120 to execute processing. In addition, the input/output unit 110 outputs a result of the processing executed by the computing unit 120. The input/output unit 110 includes various input units and various output units, and examples of the input/output unit 110 are a keyboard, a mouse, a microphone, a display, a speaker, and a touch panel. The input/output unit 110 may not be provided.

The communication unit 130 is electrically connected to the network 20, and communicates with each device via the network 20. For example, the communication unit 130 transfers the operation information, which is acquired from the work device 30, to the computing unit 120. In addition, the communication unit 130 forwards a signal generated by the computing unit 120 to the terminal 200. For example, the communication unit 130 includes various interfaces such as a network interface card (NIC) and Universal Serial Bus (USB).

The storage unit 140 stores various types of data for determining the work type representing the work performed in the work region 400, such as work data 300, and a work management program 310. The storage unit 140 is used as a non-transitory tangible storage medium to store the work management program 310. The work management program 310 may be provided as a computer program product that is recorded on a computer-readable storage medium 1, or may be provided as a computer program product that can be downloaded from a server.

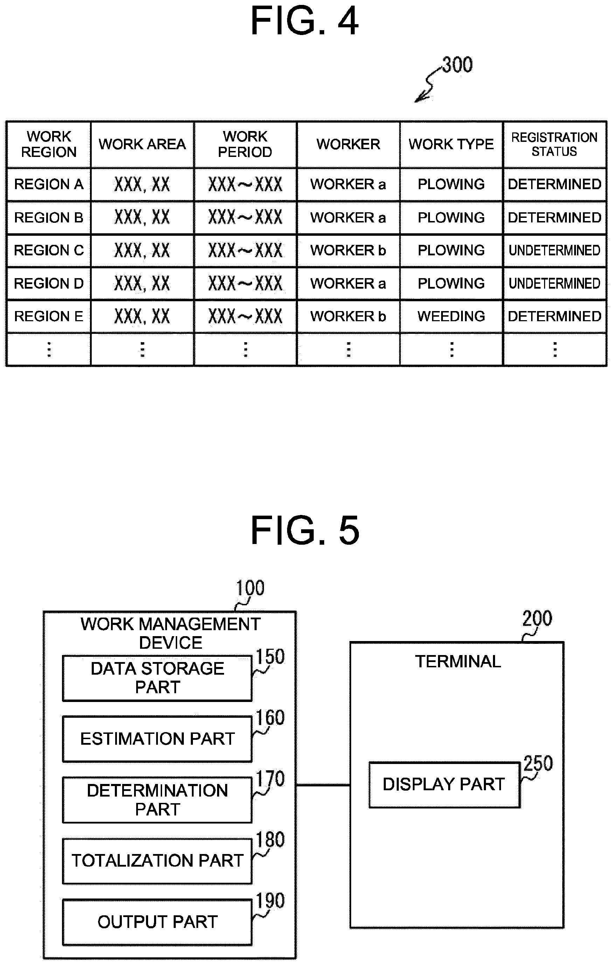

The work data 300 includes data related to work in the field, e.g., data calculated from the operation information coming from the work device 30. For example, as illustrated in Fig. 4, the work data 300 stores work region information representing the work region 400 (e.g., location and shape of the work region 400), work area information representing a work area of the work region 400, work period information representing a work period, a work type, and registration status information representing a registration status of the work type. The work region information, work period information, work type, and registration status information are stored in association with each other.

The registration status represents the status of whether the work type has been determined or not. For example, in the work data 300 in Fig. 4, in the work region 400 of" Region A", "determined" shown in the registration status indicates that the work type has been determined as "plowing". In the work region 400 of "Region C," "undetermined" shown in the registration status indicates that the work type is "plowing" and has not been determined. Hereafter, the work type that has been determined may be referred to as a determined work type.

The computing unit 120 illustrated in Fig. 1 executes the work management program 310 and is used for various data processing to determine the work type of the work performed in the work region 400. The computing unit 120 includes a central processing unit (CPU) and the like, for example.

By reading and executing the work management program 310, as illustrated in Fig. 5, the computing unit 120 implements a data storage part 150, an estimation part 160, a determination part 170, a totalization part 180, and an output part 190. The data storage part 150 stores the work data 300. The estimation part 160 acquires the operation information from the work device 30 to estimate an estimated work type. The determination part 170 determines the work type based on determination information representing that the user has confirmed the work type.
The totalization part 180 totalizes the quantity of the work regions 400 in which the work has been performed for each work type. The output part 190 outputs a region display information representing the work region 400 to the terminal 200.

Next, a description will be made on a configuration of the terminal 200. As illustrated in Fig. 1, the terminal 200 includes an input/output unit 210, a computing unit 220, a communication unit 230, and a storage unit 240. Examples of the terminal 200 are a computer, a tablet computer, and a mobile phone. The input/output unit 210 receives information that is used by the computing unit 220 to execute processing. In addition, the input/output unit 210 outputs a result of the processing executed by the computing unit 220. The input/output unit 210 includes various input units and various output units, and examples of the input/output unit 210 are a keyboard, a mouse, a microphone, a display, a speaker, and a touch panel.

The communication unit 230 is electrically connected to the network 20 and communicates with each of the devices via the network 20. For example, the communication unit 230 transfers the information acquired from the work management device 100 to the computing unit 220. In addition, the communication unit 230 forwards a signal generated by the computing unit 220 to the work management device 100. For example, the communication unit 230 includes various interfaces such as a network interface card (NIC) and Universal Serial Bus (USB).

The storage unit 240 stores various types of data, e.g., a display program 320, for displaying the work region 400 in which the work device 30 has performed the work. The storage unit 240 is used as a non-transitory tangible storage medium to store the display program 320. The display program 320 may be provided as a computer program product that is recorded on a computer-readable storage medium 2, or may be provided as a computer program product that can be downloaded from a server. The display program 320 may be recorded on the storage medium 1 and provided.

The computing unit 220 reads and executes the display program 320, and cooperates with the input/output unit 210 to implement a display part 250 as illustrated in Fig. 5. The display part 250 acquires the region display information representing the work region 400 from the work management device 100 and displays the region display information representing the work region 400. In addition, the display part 250 transmits, by operation of the user, the determination information for determining the work type of the work performed in the work region 400 to the work management device 100.

### (Operation of Work Management Device)

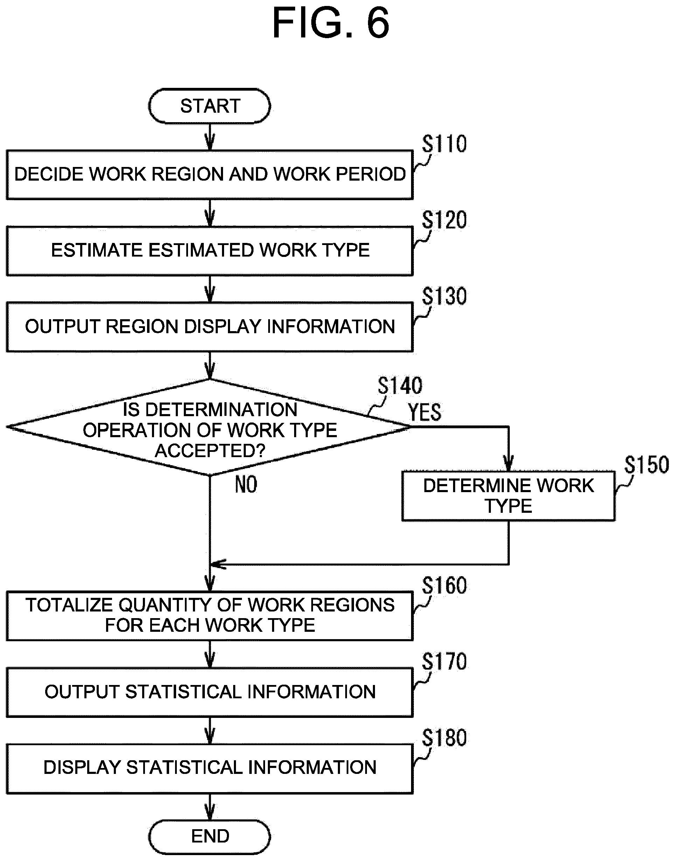

When receiving operation information from the work device 30, the computing unit 120 of the work management device 100 reads and executes the work management program 310. By executing the work management program 310, the computing unit 120 executes the processing illustrated in Fig. 6, which is a work management method.

In step S110, the estimation part 160 decides the work region 400 in which the work device 30 has performed the work and the work period based on the operation information acquired from the work device 30. For example, the estimation part 160 decides the work region 400 based on the location information of the work device 30 included in the operation information. For example, the work region 400 is represented by an arbitrary closed figure, such as a polygon, rectangle, etc., that includes a location represented by the acquired location information. For example, the work region 400 is represented by a figure that surrounds all of the acquired location information. The work region information representing the decided work region 400 is newly stored by the estimation part 160 in the work data 300 illustrated in Fig. 4.

In addition, the estimation part 160 decides a period from the time when the work device 30 is started to the time when the work device 30 is stopped as the work period. The estimation part 160 stores the work period information representing the decided work period in the work data 300 in association with the newly added work region information.

The estimation part 160 also stores the workers who performed work in the work region 400 in the work data 300. The estimation part 160 has worker correspondence data that associates the work device 30 with the worker, and decides the worker based on the work device 30 that transmitted the operation information.

In step S120 illustrated in Fig. 6, the estimation part 160, based on the operation information estimate the estimated work type that represents the work type of the work performed in the work region 400. For example, the estimation part 160 estimates the estimated work type using a learned model obtained by machine learning.
In this case, the learned model is learned to estimate the estimated work type from the operation information. In addition, the estimation part 160 may estimate the estimated work type based on the model of the work device 30. In this case, the storage unit 140 stores work correspondence data that associates the model of the work device 30 with the estimated work type. The estimation part 160 estimates the estimated work type based on the work correspondence data. The estimated work type is associated with the work region information representing the work region 400 by the estimation part 160 and stored in the work data 300 illustrated in Fig. 4. In addition, the estimation part 160 sets the corresponding registration status of the work data 300 to "undetermined".

In step S130 illustrated in Fig. 6, the output part 190 outputs the region display information that associates the work region information stored in the work data 300 with the registration status information to the terminal 200. For example, the output part 190 outputs the region display information that distinctively represents the first work region 400-1, whose registration status indicates "determined", and the second work region 400-2, whose registration status indicates "undetermined".
The region display information includes newly added work region information as well as work region information stored in the past.

In step S140, the display part 250 of the terminal 200 displays an image representing the work region 400 on a map, as illustrated in Fig. 2, based on the region display information acquired from the work management device 100, and accepts a determination operation of the work type by the user. For example, the display part 250 displays an image that can distinctively represent the first work region 400-1, in which the work type has been determined, and the second work region 400-2, in which the work type has not been determined. The user can easily identify the second work region 400-2 in which the work type has not been determined.

When the determination operation is input to the input/output unit 210, the display part 250 transmits the determination information representing the correct work type to the work management device 100. When the determination information is transmitted, the process moves to step S150 illustrated in Fig. 6. For example, the user selects the second work region 400-2 in which the work type has not been determined on the input/output unit 210 of the terminal 200. When the second work region 400-2 is selected, as illustrated in Fig. 2, the display part 250 displays work information 410 representing the estimated work type of the second work region 400-2 corresponding to to the selected second work region 400-2. The user confirms the estimated work type displayed. When the displayed estimated work type is the same as the work type of the work performed in the corresponding second work region 400-2, the user inputs a confirmation operation to confirm the work type, for example, an operation of selecting a confirmation button 411, to the input/output unit 210.
When the estimated work type is different from the work type of the work performed in the corresponding second work region 400-2, the user inputs a change operation to change the work type, for example, an operation of selecting a change button 412, to the input/output unit 210. After performing the change operation, the user inputs the correct work type to the input/output unit 210. Based on the confirmation or change operation, the display part 250 outputs the determination information representing the correct work type to the work management device 100. When the confirmation operation is input to the input/output unit 210, the determination information represents that the estimated work type of the selected second work region 400-2 is correct. When the change operation is input to the input/output unit 210, the determination information represents the correct work type of the selected second work region 400 -2.

In step S140 illustrated in Fig. 6, the display part 250 also accepts a statistical display operation for displaying statistical information representing the quantity of the work regions 400 for each work type. When a statistical display operation is input without a determination operation being input, the display part 250 transmits a request information requesting statistical information to the work management device 100. When the request information is transmitted, the process moves to step S160.

In step S150, the determination part 170 of the work management device 100 determines the work type of the second work region 400- based on the determination information representing the correct work type. 2 based on the determination information representing the correct work type. Specifically, the determination part 170 acquires the second work region 400-2 represented in the determination information and the correct work type. In the work data 300 illustrated in Fig. 4, the determination part 170 sets the correct work type and changes the registration status to "determined" in the second work region 400-2 represented by the determination information. For example, when a confirmation operation, for example, an operation of selecting a confirmation button 411, is input, the determination part 170 changes the corresponding registration status to "determined". When a change operation is input, the determination part 170 changes the work type in the second work region 400-2 to the work type represented by the determination information, and changes the registration status to "determined".

In step S160 illustrated in Fig. 6, the totalization part 180 totalizes the quantity of the work regions 400 for each work type based on the work data 300 illustrated in Fig. 4. For example, first, the totalization part 180 extracts one or more work types stored in the work data 300. In the example illustrated in Fig. 4, the totalization part 180 extracts "plowing" and "weeding" as the work types stored in the work data 300.

Next, the totalization part 180 totalizes the quantity of the work regions 400 that correspond to one or more of the extracted work types among the work regions 400 stored in the work data 300. In the example illustrated in Fig. 4, the totalization part 180 obtains "4" as the quantity of the work regions 400 in which the work type is "plowing". In addition, the totalization part 180 obtains "1" as the quantity of the work regions 400 in which the work type is "weeding".

In addition, based on the work data 300, the totalization part 180 totalizes, for each work type, the quantity of the first work regions 400-1 corresponding to the determined work type and the quantity of the second work regions 400-2 corresponding to the undetermined work type. In the example illustrated in Fig. 4, the totalization part 180 obtains "2" as the quantity of the first work regions 400-1, in which the work type is "plowing" and the registration status is "determined". The totalization part 180 obtains "2" as the quantity of the second work regions 400-2, in which the work type is "plowing" and the registration status is "undetermined". The totalization part 180 obtains "1" as the quantity of the first work regions 400-1, in which the work type is "weeding" and the registration status is "determined". The totalization part 180 obtains "0" as the quantity of the second work regions 400-2, in which the work type is "weeding" and the registration status is "undetermined".

In step S170 illustrated in Fig. 6, the output part 190 outputs statistical information representing the quantity of the work regions 400 for each work type to the terminal 200. The statistical information may represent, for each work type, the quantity of the work regions 400 by distinguishing between the quantity of the first work regions 400-1 corresponding to a determined work type in which the work type has been determined and the quantity of the second work regions 400-2 corresponding to an estimated work type in which the work type has not been determined.

In step S180, the display part 250 of the terminal 200 displays the statistical information acquired from the work management device 100 on the input/output unit 210. As illustrated in Fig. 3, the display part 250 displays the overall quantity 510 representing the quantity of the work regions 400 in which the work has been performed, the undetermined quantity 520 representing the quantity of the second work regions 400-2 in which the work type has not been confirmed, and the determined quantity 530 representing the quantity of the first work regions 400-1 in which the work type has been confirmed. As illustrated in Fig. 3, the display part 250 may display the overall quantity 510 using the undetermined quantity 520 and the determined quantity 530, and may display a percentage of the undetermined quantity 520 relative to the overall quantity 510. In addition, the display part 250 may also display a percentage of the undetermined quantity 520 relative to the overall quantity 510 in a numerical value. By confirming the image displayed on the input/output unit 210, the user can identify the percentage of work regions 400 in which the work type has not been determined for each work type.

In this way, the work management system 1000 supports the confirmation operation of the work type by the user.

### (Modified Embodiments)

The configuration that has been described in each of the embodiments merely constitutes an example, and the configuration can be modified within the scope that does not interfere with the functions. For example, when the display part 250 of the terminal 200 displays the quantity of the work regions 400 for each work type illustrated in Fig. 3, the display part 250 may display the quantity of the first work regions 400-1, in which the work type has been determined, and the quantity of the second work regions 400-2, in which the work type has not been determined without distinguishing them.

In the graph illustrated in Fig. 3, instead of the quantity of the work regions 400, the display part 250 displays an area of the work regions 400. In this case, in step S160 illustrated in Fig. 6, the totalization part 180 of the work management device 100 totalizes the area of the work regions 400 and calculates a total area for each work type based on the work data 300 illustrated in Fig. 4. In addition, for each work type, the totalization part 180 totalizes an area of the first work regions 400-1 corresponding to the determined work type and an area of the second work regions 400-1 corresponding to the work type that has not been determined, and calculates a total area of the first work regions 400-1 and a total area of the second work regions 400-2. In step S170, the output part 190 outputs statistical information representing the area of the work region 400 for each work type to the terminal 200. The statistical information may represent, for each work type, the area of the work regions 400 by distinguishing between the area of the first work regions 400-1 corresponding to a determined work type in which the work type has been determined and the area of the second work regions 400-2 corresponding to an estimated work type in which the work type has not been determined.
In step S180, the display part 250 of the terminal 200 displays the statistical information on the input/output unit 210.

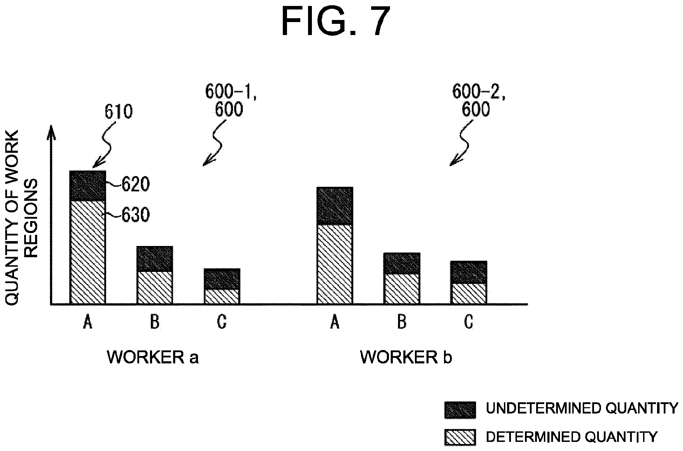

As illustrated in Fig. 7, the display part 250 may also display the quantity of the work regions 400 for each work type by distinguishing workers who performed work in the work regions 400. In the example illustrated in Fig. 7, a first worker-specific graph 600-1 represents, for each work type, a quantity of the work regions 400 in which the worker a has performed work. A second worker-specific graph 600-2 represents, for each work type, a quantity of the work regions 400 in which the worker b has performed work. A worker-specific graph 600 may distinctively represent an undetermined quantity 620 representing a quantity of the second work regions 400-2 in which the work type has not been confirmed, and a determined quantity 630 representing a quantity of the first work regions 400-1 in which the work type has been confirmed. The display part 250 may display an overall quantity 610 using the undetermined quantity 620 and the determined quantity 630, and may display a percentage of the undetermined quantity 620 relative to the overall quantity 610. This allows the user to confirm the work type of the work performed in the work regions 400 on a worker-by-worker basis.
In addition, the user can easily compare the confirmation rate of the worker confirming the work type with that of other workers. For example, the user may notify a worker whose confirmation rate is lower than that of other workers to confirm the work type. In this case, the totalization part 180 of the work management device 100 totalizes the quantity of the work regions 400 for each work type by distinguishing workers, and outputs statistical information representing the totalized quantity to the terminal 200.

Instead of workers, the display part 250 may display the the quantity of the work regions 400 for each work type by distinguishing work region groups that classify a plurality of work regions 400. Here, a work region group includes a plurality of work regions classified based on similarity between two work regions 400. The similarity indicates how similar the work performed is in the two work regions 400 in which work of the same work type has been performed.

For example, the totalization part 180 of the work management device 100 calculates similarity of two work regions 400 based on the work data 300 illustrated in Fig. 4. For example, the similarity is calculated using a distance between the two work regions 400 and a time difference between times when work has been performed in the two work regions 400. For example, the similarity may also be calculated based on a two-dimensional distance with the distance between the work regions 400 and the time difference each as one axis. Specifically, the totalization part 180 calculates the Euclidean distance, which is calculated as the square root of the square of the distance plus the square of the time difference. By calculating the reciprocal of the calculated Euclidean distance, the totalization part 180 calculates the similarity. In addition, any distance may be used instead of the Euclidean distance, for example, the Manhattan distance.

In this case, the totalization part 180 classifies the work regions 400 according to the similarity in step S160 illustrated in Fig. 6. For example, the work region 400 are classified in such a manner that two work regions 400 whose similarity is less than a threshold are included in a same work region group. The totalization part 180 totalizes the quantity of the work regions 400 for each work type by distinguishing work region groups. In step S170, the totalization part 180 outputs statistical information representing the totalized quantity to the terminal 200. The display part 250 of the terminal 200 displays the the quantity of the work regions 400 for each work type by distinguishing workers based on the statistical information.

In addition, the display part 250 may display the quantity of the work regions 400 in which the work was performed on a predetermined date. In this case, the totalization part 180 totalizes the quantity of the work regions 400 in which the work was performed on a predetermined date for each work type, and outputs statistical information representing the totalized quantity to the terminal 200.

The work region 400 illustrated in Fig. 2 may represent a field. In this case, the work region 400 of the work data 300 illustrated in Fig. 4 represents a field, and in step S110 illustrated in Fig. 6, the estimation part 160 decides a field in which the work has been performed based on position information of the work device 30. For example, the estimation part 160 decides a field that includes the position in which the work device 30 performed the work as the field in which the work has been performed. The display part 250 displays a quantity of fields in which the work has been performed.

A single field may include a plurality of work regions 400. For example, in step S160 illustrated in Fig. 6, when the registration status of all of the work regions 400 included in a single field is "determined", the totalization part 180 of the work management device 100 judges that the work type of the corresponding field has been determined. When the registration status of at least one of the 400 work regions included in a single field is "undetermined", the totalization part 180 judges that the work type of the corresponding field has not been determined. The totalization part 180 totalizes, for each work type, a quantity of the first work regions 400-1 corresponding to the determined work type and a quantity of the second work regions 400-2 corresponding to the undetermined work type.

In step S110 illustrated in Fig. 6, the estimation part 160 may use any method to decide a work period. For example, the estimation part 160 may decide a work period based on a time when the work device 30 entered the field and a time when the work device 30 left the field.

In step S140 illustrated in Fig. 6, the display part 250 of the terminal 200 may display work regions 400 in which the work has been performed in a predetermined period, e.g., from the present time to one month ago. In this case, in step S130, the output part 190 extracts the work regions 400 in which the work has been performed in the predetermined period from the work data 300 illustrated in Fig. 4. Specifically, the output part 190 extracts the work regions 400 in which the work period is included in the predetermined period. Region display information representing the extracted work regions 400 is output to the terminal 200.

In the description that has been made so far, each of the embodiments and the modified embodiments merely constitutes an example. The configuration that has been described in each of the embodiments and the modified embodiments may be modified as desired within the scope that does not interfere with the functions or/and may be combined as desired. Furthermore, some of the functions that have been described in the embodiments and the modified embodiments may not be provided as long as the necessary functions can be exerted. For example, the processing of the work management device 100 may partially or entirely be implemented by the terminal 200. Also, the processing of the terminal 200 may partially or entirely be implemented by the work management device 100.

In addition, the work management system 1000 may not include the terminal 200, and may display the region display information and the statistical information on an external terminal that is not included in the work management system 1000. In addition, the display part 250 of the terminal 200 may acquire map information from an external server not included in the work management system 1000 and display the map information representing the region display information on the map.

### REFERENCE SIGNS LIST

1, 2 Storage medium
20 Network
30 Work device
100 Work management device
110 Input/output unit
120 Computing unit
130 Communication unit
140 Storage unit
150 Data storage part
160 Estimation part
170 Determination part
180 Totalization part
190 Output part
200 Terminal
210 Input/output unit
220 Computing unit
230 Communication unit
240 Storage unit
250 Display part
300 Work data
310 Work management program
320 Display program
400 Work region
410 Work information
411 Confirm button
412 Change button
510 Overall quantity
520 Undetermined quantity
530 Determined quantity
600 Worker-specific graph
610 Overall quantity
620 Undetermined quantity
630 Determined quantity
1000 Work management system

## Claims

1. A work management method comprising:
storing work data associating a determined work type that represents work performed in a first work region and has been determined with work region information that represents the first work region;
estimating an estimated work type that represents work performed by a work device in a second work region, based on operation information that represents operation status of the work device; and
outputting region display information that distinctively represents the first work region corresponding to the determined work type and the second work region corresponding to the estimated work type that has not been determined.

2. The work management method according to claim 1, further comprising:
totalizing, for each of one or more work types included in the determined work type and the estimated work type, a quantity or area of a work region in which the one or more work types have been performed among a plurality of work regions that include the first work region and the second work region, wherein
the outputting the region display information comprises outputting statistical information that represents a quantity or area of the work region.

3. The work management method according to claim 2, wherein:
the totalizing the quantity or area of the work region in which the one or more work types have been performed comprises distinctively totalizing the determined work type and the estimated work type that has not been determined,
the quantity or area of the work region represented in the statistical information distinguishes between a quantity or area of the work region corresponding to the determined work type and a quantity or area of the work region corresponding to the estimated work type that has not been confirmed.

4. The work management method according to claim 3, further comprising:
displaying, for each of the work types, information representing a percentage of the estimated work type that has not been determined.

5. The work management method according to claim 3 or 4, further comprising:
storing information of a first worker who works in the plurality of work regions and information of a second worker who works in the plurality of work regions; and
displaying the statistical information, wherein
the totalizing the quantity or area of the work region in which the one or more work types have been performed comprises distinctively totalizing a first work type in which work has been performed by the first worker and a second work type in which work has been performed by the second worker,
the quantity or area of the work region represented in the statistical information distinguishes between a quantity or area of the work region corresponding to the first work type in which work has been performed by the first worker and a quantity or area of the work region corresponding to the second work type in which work has been performed by the second worker,
the displaying the statistical information comprises displaying information representing a percentage of the work region corresponding to the estimated work type that has not been determined, which is included in the work region corresponding to the first work type in which work has been performed by the first worker.

6. The work management method according to claim 2, further comprising:
storing information of a first worker who works in the plurality of work regions and information of a second worker who works in the plurality of work regions, wherein
the totalizing the quantity or area of the work region in which the one or more work types have been performed comprises distinctively totalizing a first work type in which work has been performed by the first worker and a second work type in which work has been performed by the second worker, and
the quantity or area of the work region represented in the statistical information distinguishes between a quantity or area of the work region corresponding to the first work type in which work has been performed by the first worker and a quantity or area of the work region corresponding to the second work type in which work has been performed by the second worker.

7. The work management method according to claim 6, further comprising:
displaying, for each of the work types, information representing the quantity or area of the work region corresponding to the first work type in which work has been performed by the first worker.

8. The work management method of any one of claims 1 to 7, further comprising:
determining the estimated work type based on determination information representing a correct work type performed in the second work region.

9. The work management method of any one of claims 1 to 8, wherein:
the determined work type of the first work region is estimated based on operation information representing operation status of a work device that performed work in the first work region, and
the determined work type of the first work region is determined based on determination information representing a correct work type performed in the first work region.

10. A work management system comprising:
a data storage part for storing work data associating a determined work type that represents work performed in a first work region and has been determined, with the first work region;
an estimation part for estimating an estimated work type that represents work performed by a work device in a second work region, based on operation information that represents operation status of the work device; and
an output part for outputting region display information that distinctively represents the first work region corresponding to the determined work type and the second work region corresponding to the estimated work type that has not been determined.

11. A work management program for causing a computing unit to execute:
storing work data associating a determined work type that represents work performed in a first work region and has been determined, with the first work region;
estimating an estimated work type that represents work performed by a work device in a second work region, based on operation information that represents operation status of the work device; and
outputting region display information that distinctively represents the first work region corresponding to the determined work type and the second work region corresponding to the estimated work type that has not been determined.
